# EUROPEAN PATENT SPECIFICATION

(11) **EP 3 303 772 B1**
(45) Date of publication and mention of the grant of the patent: **16.09.2020**
(21) Application number: 15726954.9
(22) Date of filing: 02.06.2015
(51) Int. Cl.: E21C 41/26, E21B 7/02, G01S 19/38

(54) **ADAPTATION OF MINING OPERATIONS SATELLITE COVERAGE**
ADAPTION DER SATELLITENABDECKUNG VON BERGBAUARBEITEN
ADAPTATION DE LA COUVERTURE PAR SATELLITE D'OPÉRATIONS D'EXPLOITATION MINIÈRE

(43) Date of publication of application: 11.04.2018
(73) Proprietor: Sandvik Mining and Construction Oy, 33330 Tampere (FI)
(72) Inventor: HEIKKILÄ, Tommi, FI-33330 Tampere (FI); KOPPEROINEN, Ari, FI-33330 Tampere (FI); HANSKI, Sami, FI-33330 Tampere (FI)
(74) Representative: Sandvik
(86) International application number: PCT/EP2015/062245
(87) International publication number: WO 2016/192776

(56) References cited:
- JP-A- 2000 204 872
- US-A- 6 002 362
- US-A1- 2003 112 181
- US-A1- 2006 189 324
- US-A1- 2012 299 702

## Description

### Background of the invention

The invention relates to an apparatus for determining positional condition of satellite positioned mobile mine work machines at a work site.

The invention further relates to a method of determining positional condition of satellite positioned mobile mine work devices, and to a computer program product for executing the disclosed method and solution.

The field of the invention is defined more specifically in the preambles of the independent claims.

In mines different types of mobile mine work machines may be used. The mine work machines execute designed mine work tasks at designed positions at mine work sites. Typically the mine work machines need to be positioned rather accurately at the work site. Positioning systems based on satellite navigation are widely used in mine work machines, excluding underground mining solutions, of course. The operation of the satellite-based positioning systems require proper satellite coverage, which means that positioning signal needs to be received by a positioning receiver form at minimum three satellites orbiting the earth. At the work site there may be places wherein one or more satellites are obscured from view, or the quality of satellite signal is poor, thereby preventing accurate positioning to be done at the work site. Some solutions have been disclosed for predicting satellite coverage. However, it has been noted that the present solutions have some disadvantages and do not provide sufficient solution. One prior art solution is disclosed in patent publication US 2006/0189324 A1, which document discloses the features in the preamble of claims 1 and 13.

### Brief description of the invention

An object of the invention is to provide a novel and improved apparatus, method and computer program product for determining positional condition of a mobile mine work machine at a mine work site.

The apparatus according to the invention is characterized by the features of the independent apparatus claim 1.

The method according to the invention is characterized by the features of the independent method claim 13.

The computer program product according to the invention is characterized by the features in independent claim 14.

An idea of the disclosed solution is that one or more mine work tasks are determined for one or more mobile mine work machines. The mine work tasks are to be executed at operational positions at the mine work site. The disclosed apparatus and system receives data on satellite signal availability and determines satellite coverage condition data for the one or more operational positions. The satellite coverage condition data is determined on the basis of the data of satellite signal availability and an environmental model provided by the system. In order to avoid operational problems, the system takes into account the determined satellite coverage condition data and modifies execution of the one or more mine work tasks. The modification of the mine work task may relate to timing and time schedules of the mine work task, to issues of content of the actual mine work task, and to positional matters of the mine work task, or two or more of them simultaneously.

An advantage of the disclosed solution is that execution of desired mine work tasks may be planned and scheduled by taking into account ability to execute proper satellite positioning at the work site. This way operation of the mine work machines at the work site may be executed without unwanted downtimes. Avoidance of positioning problems at the work site and preplanning possible future situations allow achieving improved efficiency for the mine work operations.

According to an embodiment, the apparatus and system are configured to assist an operator of a mobile mine work machine on the basis of the determined satellite coverage condition data. The system may provide the operator instructions to modify the current and future work tasks. An advantage of this solution is that the work of the operator may be facilitated and a less skilled operator is required for the work when utilizing the disclosed system assisting work of the operator.

According to an embodiment not claimed, the disclosed apparatus and system determine satellite coverage condition data, take the data into account, and modify instant of time of execution of one or more mine work tasks. This way, poor satellite coverage situations and other problems in satellite positioning can be avoided beforehand. The execution of the following mine work tasks may be scheduled according to predicted future satellite coverage condition data. In practice, the system may prepare and inform an operator of the mobile mine work machine of re-scheduled new suitable instant of time when sufficient satellite positioning coverage is available at a certain location of the work site and when execution of the planned future mine work task is possible. The system may also indicate places and time instances to be avoided because of possible poor satellite view situation. The system may also modify instant of time of the execution of the mine work task, as well as content and position according to any other suitable manner.

According to an embodiment, the disclosed apparatus and system determine and propose future period of times to be prioritized for the execution of the at least one work task. This way, it is possible to schedule the execution of the mine work task to be done at the proposed one or more execution periods of time, whereby the execution of the mine work task may be carried out without existing satellite positioning problems. Time periods having insufficient satellite coverage condition may now be easily avoided. The system may automatically provide an operator of the mobile mine work machine with a message on a display device for indicating the recommended future time instances and time intervals. The operator may also indicate manually for the apparatus and system positions and work tasks, whereby the system may calculate one or several recommended future period of times for carrying out the intended work task. This embodiment provides valuable information for the operator and facilitates the operation.

According to an embodiment, the disclosed apparatus and system determine satellite coverage condition data, take the data into account, and modify one or more mine work tasks to be executed at the mine work site. In other words, this solution is arranged to modify the content of the mine work task on the basis of the determined satellite coverage condition data. Thereby, the system may limit the content of the mine work task so that it can be executed at a certain instant of time, or alternatively, the system may divide the original mine work task into two or more partial mine work tasks, and may then indicate which one of them is executable. Further, the system may instruct the mine work machine to execute preparatory work when execution of the actual mine work task is not possible due to uncertainty of the satellite positioning. The system may also provide the operator of mine work machine suitable instructions and guidance for modifying the mine work task so that it can be executed at least partly. The system may modify the content of the mine work task according to any other suitable manner.

According to an embodiment, the work task comprises plans or instructions regarding routes or movement paths of tramming or driving of the mobile mine work machine. The disclosed apparatus determines satellite coverage condition data, takes the data into account, and modifies the route defined in the mine work task. The route may be re-planned so that poor satellite coverage positions of the original route may be avoided. The apparatus may also schedule execution of the tramming or driving of the machine in order to ensure fast and proper operation. The route planning feature may also take into account other mobile mine work machines operating at the work site and may thereby determine the modified route so that no collision risk exists and that the mobile mine work machine provided with the modified route does not block or hamper movements of other machines at the work site.

According to an embodiment, the disclosed apparatus and system determine satellite coverage condition data, take the data into account, and modify a work cycle of a mine work task. Then, the mine work task may comprise several mine work phases which are executed one after each other according to the work cycle. The modification of the work cycle comprises changing order of execution of the work phases of the mine work task. The work cycle may be predesigned and may define a certain sequence or order, for execution of the work phases. Alternatively, the work cycle comprises several recognizable work phases or sub work tasks, but does not require them to be executed in a certain order. The disclosed apparatus and system may provide assistance for executing such work phases which can be done at the operational position without having continuous satellite positioning, or alternatively, the system may assist to execute work phases which are located at the operational position so that sufficient positioning coverage is available. It is also possible that the work phases and sub works are classified into at least two categories regarding their importance or need for positioning. Then, higher ranked work phases requiring accurate positioning are executed during good satellite coverage conditions and lower ranked work phases requiring no positioning may be executed when satellite coverage is uncertain or lost. Assisting work and preparatory work phases are examples of lower ranked work phases. Tramming at the work site and positioning to operational positions requires proper satellite coverage condition. Further, the system may take into account estimated durations of the work phases. When the satellite coverage condition is poor at a detected time interval, the system may then select and execute a time consuming work phase requiring no re-positioning of a carrier of the mine work machine during the execution of the work phase. The system may modify the execution of the work cycle and related work phases of the mine work tasks according to any other suitable manner. Thanks to this embodiment, the mobile mine work machine may be operated effectively, since the order and timing of the execution of the work phases may be selected and changed in accordance with the satellite coverage condition data.

According to an embodiment, the disclosed apparatus and system determine satellite coverage condition data, take the data into account, and modify the execution of the work task by dividing the mine work task with at least two mobile mine work machines. Then two, three, four or even more mine work machines may co-operate and together execute the mine work task, whereby the execution takes less time and may be done at the time when good satellite coverage condition exists. The system may estimate duration of the mine work task and may determine a determined time interval provided with sufficient satellite signals. Based on this data the system may determine the division. The system may determine the number of the engaged mobile mine work machines according to the estimated duration of the mine work task the duration of the suitable time interval. Further, the system may take into account in the division all or selected mobile mine work machines of the whole fleet of mine work machines which are available at that time, and are suitable for executing the work task. However, depending on the content of the mine work task, the engaged mine work machines may be of similar type or they may differ from each other. The apparatus may also assign dedicated special work phases of the mine work task to particular mobile mine work machines. This embodiment allows co-operation of several mine work machines causing thereby improved utilization of the whole fleet of mine work machines.

According to an embodiment, the disclosed apparatus and system are arranged to provide data on areas where the satellite positioning is possible at certain time intervals. Thus, the system determines and indicates one or more subset areas of the mine work site provided with sufficient satellite coverage at input future period of times. This way, it is possible to modify the execution by selecting mine work tasks, or work phases of the mine work task, which are locating at the determined subset areas. The execution of the mine work tasks may also be designed beforehand by taking the determined subset areas into consideration. This embodiment has a positive impact to utilization degree of the mobile mine work machines and to efficiency of the mining operation.

According to an embodiment, the disclosed apparatus and system determine and indicate future period of times to be avoided for the execution of the at least one work task. This way, it is possible to avoid insufficient satellite positioning situations already beforehand. The system may provide an operator of the mobile mine work machine with a message on a display device for indicating unsuitable future times and time intervals. It is also possible to provide the mine work task or a mine work plan with information of time periods to be avoided.

According to an embodiment, the disclosed apparatus and system calculate estimates for probabilities of positioning problems for the at least one operational position of the mine work site at a given time or working period of time. By avoiding the estimated problematic time instances and periods of times positioning problems may be avoided beforehand.

According to an embodiment, the apparatus is configured to indicate probability for satellite coverage problems relative to the determined working period of time at the operating position or working area. The probability of the reduced satellite positioning possibility at a desired location of the mine work site at a given time instant or period of time may be indicated on a display device of a control room system or display device of the machine by means of utilizing percentages % of possibility to fail the positioning. Thanks to this embodiment, the operator is well aware of the risks of the positioning problems and may make operative decisions based on the probability calculations.

According to an embodiment, the disclosed apparatus and system utilize history data such as log data and files comprising data of previous positioning situations. Thus, the apparatus may receive, gather and store positioning data realized at the mine work site, and may take the stored realized positioning data into account in future positioning situations. The history data may also be used when estimating success of positioning and satellite coverage at a given time and location. This solution utilizes existing data and practical experience regarding the positioning ability. This solution utilizes the fact that satellites move continuously along same orbits, whereby the same situations with sufficient and poor satellite coverage condition situations happen again at the same positions. This characteristic feature of the satellite positioning is now being taken into account when planning execution of the mine work operations.

According to an embodiment, the disclosed apparatus and system utilize realized positioning data of other mine work machines operating at the work site. Thus, the apparatus may receive realized position measuring data from one or more mobile mine work machines. Based on that, the apparatus may update an environmental model of the mine work site on the basis of the realized position data. The mine work site is continuously changing due to the operation of the mine work machines. This embodiment allows the environmental model to be updated. Physical environment change of the work site may mean that high constructions, rock walls and other obstacles may be removed so that they no longer block satellite view. Thus, when the real physical environment changes, the change may be taken into account and new calculations may be performed in the apparatus. Then, by updating the environmental model of the apparatus, the satellite coverage condition may also be up to date and accurate.

According to an embodiment, the disclosed apparatus and system utilize electronic ephemeris data when determining the satellite coverage condition. Thus, the satellite signal availability data received by the system is based on ephemeris data computed electronically from mathematical models of the motion of artificial satellites and the earth. In practice, the data may comprise satellite orbit and almanac data. The data may be gathered, fed, downloaded or read from one or more data files or packages. The ephemeris data may be available on the Internet, or at one or more serves, for example. Since in this embodiment the satellite availability data is not based on satellite signal receivers, the positional condition determination procedures may be done at any place at any time. Thus, this embodiment allows the planning process to be done in advance as an office work, for instance. On the other hand, a control unit of a mine work machine may be provided with access to the ephemeris data and may be provided with the apparatus executing the disclosed planning process.

According to an embodiment, the disclosed apparatus and system utilize previous positioning situations when determining the satellite coverage condition. Thus, the satellite signal availability data received by the system is based on stored history data on realized satellite signal availability and coverage gathered and input during utilization of previous satellite positioning situations. In practice, the stored data may comprise GNSS quality history data. Since in this embodiment the satellite availability data is based on history data, the positional condition determination procedures may be done at any place at any time. A control room system or a fleet system of a mine may manage log data of each of the mine work machines operating at the mine and the work site. The log data may be used as the stored history data when planning, considering and modifying the execution of the future mine work tasks.

According to an embodiment, the disclosed apparatus and system utilize current situation and satellite signal receiving capability when determining the satellite coverage condition. Thus, the satellite signal availability data received by the system is based on current satellite signal availability detected by means of at least one satellite signal receiver, which is located on the mobile mine work machine. This embodiment discloses a kind of online satellite coverage condition determination. In practice, the satellite signal availability data comprises current GNSS quality observation data.

According to an embodiment, the disclosed apparatus and system may utilize two or more of the above mentioned types of data as the satellite signal availability data when determining the satellite coverage condition. Thus, the apparatus may use current and history GNSS data as well as satellite orbit and almanac data. This embodiment improves accuracy of satellite coverage condition determination.

According to an embodiment, the mobile mine work machine is a rock drilling rig. The mine work task of the rock drilling rig is to drill drill holes to a rock surface. The parameters such as positions, directions and length of the drill holes are determined in drilling plans or drilling patterns, whereby the drilling pattern defines the mine work task, at least partly. The disclosed apparatus and system may modify instant of time of the execution of the mine work task on the basis of the determined satellite coverage condition data. Alternatively, or in addition to, the system may take the satellite coverage condition data into account when defining which part of the drilling pattern is executed next. The system may also divide larger drilling patters into subsets and may define plans and schedules for executing the drilling, tramming and positioning procedures of the recognized subsets. The apparatus may generate a plan or route for the tramming or it may modify originally determined tramming route on the basis of the satellite coverage condition data and the determined execution order of the drilling of the drilling pattern or subsets of the drilling pattern or plan.

According to an embodiment, the environmental model is a three dimensional model (3D) of the mine work site. Then, the environmental model may comprise point cloud data on the mine work site. The point cloud data comprises coordinates for the determined points of the 3D -model. By means of the 3D -model, influence of obstacles such as high rock walls, buildings and other man-made constructions may be taken into consideration when calculating satellite signal availability at desired operating positions. The environmental model may be updated as the work site changes. The mobile mine work machines may be provided with scanners or corresponding devices for producing updating data of the surroundings.

According to an embodiment, the operational position, where the mine work task is to be executed at the mine work site, is determined for the apparatus by inputting coordinate data into the control unit. Then, the apparatus may use the inputted coordinate data when calculating and estimating satellite coverage at a given time of period of time. The coordinate data may be inputted manually by the operator of the mobile mine work machine or by the designer of the mine work plan. Alternatively, the coordinate data may be read from a data file or data element and may be input to the control unit of the apparatus. Thus, there are several alternative ways for inputting the operational position and intended period of time for the apparatus in order to execute the satellite condition coverage determination and mine work task modification.

According to an embodiment, the operational position where the mine work task is to be executed at the mine work site is determined for the apparatus by determining the current position of the monitored mobile mine work machine. The control unit of the apparatus is configured to capture and process satellite positioning data received by at least one satellite signal receiver, which is located on the mobile mine work machine. The control unit is configured to determine by means of the processor and the position processing program the current position of the mobile mine work machine, and is configured to use the position data as the operation position when determining satellite coverage and positioning ability at the mine work site. The apparatus may calculate suitable further time instances and periods when the satellite positioning is possible at that operational position or nearby the current position. The apparatus may also recognize possible target positions, which are located close to the current position and may estimate satellite positioning condition data also for the neighboring target or operational positions.

According to an embodiment, the operational position where the mine work task is to be executed at the mine work site is determined for the apparatus by indicating the desired one or more operational positions on the environmental model. The environmental model may be displayed on one or more display devices, and the operator or designer may indicate the operation points simply by means of a pointing device, for example.

According to an embodiment, the control unit of the apparatus is arranged on-board the mobile mine work machine. The apparatus may belong to a control system or unit of the mobile mine work machine, whereby the apparatus is integrated to be part of the control system of the machine. Alternatively, the apparatus may be a device separate from the control unit of the mine work machine.

According to an embodiment, the control unit of the apparatus is external to the mobile mine work machine. The control unit may be a laptop computer, server or any other suitable computer or mobile electronic terminal device.

According to an embodiment, the control unit of the apparatus comprises at least one on-board control unit and at least one external control unit, which control units are arranged to communicate with each other through a data transmission connection.

According to an embodiment, the control unit of the apparatus is external to the mobile mine work machine. The control unit is part of a design computer provided with at least one computer program product for designing drilling patterns or other mine work tasks and plans. Then, the control unit may estimate satellite positioning ability and suitable future time for executing the designed mine work tasks and plans.

According to an embodiment, the control unit of the apparatus is on-board a rock drilling rig and is provided with one or more computer program products for designing drilling patterns and/or other tasks or plans. Then, the control unit may estimate satellite positioning ability and suitable future time for executing the patterns and plans.

According to an embodiment, the apparatus is configured to categorize at least two areas of the work site on the basis of the calculated satellite coverage and/or satellite positioning condition data at one or more input future period of times. The apparatus is further configured to indicate the categorized at least two areas of the work site on at least one display device by means of different indication markings. The indication markings may utilize differing colors, line types, hatches etc.

According to an embodiment, the apparatus is configured to modify execution of the at least one work task of rock drilling rig on the basis of the determined satellite coverage condition data. The work task of the rock drilling rig being drilling drill holes determined in a drilling pattern. The drilling pattern defines positions, directions and lengths of the drill holes to be drilled as well as number of drill holes. The apparatus may be configured to divide a large drilling pattern with two or more mobile mine work machines in order to avoid reduced satellite coverage situation. The apparatus may provide the operator or designed with a proposed divided drilling pattern. This embodiment may also be utilized so that the drilling patter is divided into two or more subsets which are drilled at separate time instances designed by the apparatus, whereby the same or different rock drilling rig may be used.

According to an embodiment, the mobile mine work device is a rock drilling rig. Tramming of the rock drilling rig may be modified in accordance with the satellite coverage condition data. The disclosed apparatus and the system may determine a suitable route for the tramming. In case the mine work task of the rock drilling rig comprises a preplanned tramming route or path, the apparatus may modify the tramming route when modifying the execution of the mine work task.

According to an embodiment, the mobile mine work device is a rock drilling rig provided with at least one rock drilling unit for drilling bore holes. The apparatus may provide assistance in positioning the rock drilling to a drilling position at the work site. When being positioned to the drilling position a carrier of the rock drilling rig may be kept unchanged in relation to the environmental model and new positioning is required only when the carrier moved again. Thereby, several drill holes are drilled at one drilling position. Relative position between the carrier and the drilling unit may be detected by sensors or measuring devices and executing needed calculations in the control unit of the rock drilling rig. The apparatus is configured to detect when the carrier is moved and direction of movement of the carrier. The apparatus may calculate or estimate following new operational position of the rock drilling rig and may then provide the operator of the rock drilling rig with information relating to ability to use satellite positioning at the new operational position. The apparatus may also assist in planning a suitable tramming route for the machine.

According to an embodiment, the apparatus is configured to determine drilling duration of a determined drilling pattern, and the apparatus is further configured to determine a time instant for the drilling the drilling pattern with sufficient satellite coverage. Thus, the apparatus may determine a successful time interval for the drilling of the drilling pattern, or may define suitable time intervals for desired parts of the drilling pattern.

According to an embodiment, the apparatus is configured to indicate time instances of insufficient satellite coverage for the examined drilling pattern of one or more parts or subsets of the examined drilling pattern.

According to an embodiment, the apparatus is configured to modify drilling order of drill holes of an extensive drilling pattern in accordance with the determined satellite coverage. The apparatus is configured to indicate for the operator a limited subset of holes of the drilling pattern and the position of the rock drilling rig for executing the drilling of the drill holes of the subset.

According to an embodiment, the mobile mine work device is a load carrying vehicle provided with at least one load carrying space. Then, the mine work task executed at the work site by a dumber or a corresponding vehicle provided with a load carrying space may be a position to a predetermined loading position, transport drive, transport route, position to an unloading position and emptying the load carrying space. The operational position may be the loading position or the unloading position. The apparatus may calculate estimates for satellite positioning availability and may also calculate satellite coverage for the transport drive at a given time. The operation and the route of the load carrying mobile mine vehicle may be controlled in accordance with the determined satellite coverage condition data.

According to an embodiment, the mobile mine work device is a loading vehicle provided with a bucket. The loading vehicle may be a wheel loader, for example. The apparatus may be configured to select piles of rock at the work site so that they are located at sufficient satellite coverage. Also, other target points and unloading points may be selected according to the ability to satellite positioning at the given time instance. The operation and a route or moving path of the loading mobile mine vehicle may be controlled in accordance with the determined satellite coverage condition data.

According to an embodiment, the mobile mine work device is a mobile crushing or screening device dedicated to further process detached rock material by means of crushing means and power screening means. The mine work task may define operations carried out at operational positions and a tramming route for moving the machine. The mobile crusher may be provided with a satellite positioning system disclosed in this patent application.

According to an embodiment, the apparatus is configured to estimate duration of the work task to be executed at the work site, and the apparatus is configured to calculate the satellite coverage for the needed future period of time in response to input future period of time selected for the execution of the mine work task.

According to an embodiment, the apparatus is configured to take into account at least some of the following features when determining the satellite positioning ability: satellite signal availability, signal strength, quality of signal and number of available (visible) artificial navigation satellites. The apparatus may also determine Dilution of Precision (DOP) values, such as Geometric Dilution of Precision (GDOP).

According to an embodiment, the position of the mobile mine machine may be determined by means of a satellite-based positioning system GNSS (Global Navigation Satellite Systems), such as GPS (US), GLONASS (RU), Galileo (EU) or Compass (CN).

According to an embodiment, the work site may be a mine, open pit mine, construction site, road construction site or building site or any other place where satellite positioning system is operable.

According to an embodiment, the apparatus is configured to recognize and store data on realized operational positions with problematic satellite availability. This data may be utilized in later positioning situations. Walls, trees, buildings and other obstacles may obstruct satellites from view and may thus prevent or hamper position detection. It is possible to prioritize execution of work tasks at the problematic operational position so that the best available satellite visibility is guaranteed for them.

According to an embodiment, the positioning system is without any pseudolite, whereby the work site is a pseudolite free area. Thus, in this embodiment the improved operability and capability to utilize satellite positioning is based on better utilization of the existing navigation satellites by timing the work tasks according to the satellite signal availability and also by modifying the content and steps of the work task itself.

According to an embodiment, the positioning system is provided with all any of the other features presented in this patent application regarding the improved positioning system, but may also be provided with one or more pseudolites. This may be the situation, when the work site already has the pseudolites arranged, or when installing of the pseudolites may be done without extensive work.

According to an embodiment, estimation of success of the satellite positioning is indicated on a display device for the operator after the operator has assigned a next operational position for the control unit on the screen.

According to an embodiment, the apparatus is configured to share the determined satellite coverage condition data with two or more mobile mine work machines and/or control room products or fleet managing systems. This embodiment improves utilization of the determined satellite coverage condition data.

According to an embodiment, operation of the mobile mine work machine has effect on the mine work site. Thus, the surface shapes of the mine work site alter because of the operation of the mobile mine work machine. Drilling, blasting and earth moving modify the environment. This means that the environmental model should also be changed in order to keep it up to date. The mobile mine work machine may gather during the execution of the mine work task information on the surroundings and may connect that data with position coordinate data determined by means of satellite positioning system. The data may be stitched to the previous environmental model and stored. This embodiment allows the environmental model to be updated during the normal process.

The above disclosed embodiments and the presented individual features can be combined within the scope of the appended claims in order to form suitable solutions and combinations provided with desired properties.

### Brief description of the figures

Some embodiments are described in more detail in the accompanying drawings, in which
Figure 1 is a schematic side view showing a rock drilling rig, which is an example of a mobile mine work machine,
Figure 2 is a schematic view showing a work site wherein satellite visibility is partly prevented because of rock walls and high manmade constructions,
Figure 3 is a schematic diagram showing possible types of control units of the disclosed apparatus and also additional equipment belonging to the apparatus,
Figure 4 is a schematic diagram showing basic principles of the disclosed apparatus and data needed for executing the disclosed processes,
Figure 5 is a schematic diagram showing some possible alternative modifications, which may be done for mine work tasks based on determined satellite coverage condition data,
Figure 6 is a schematic diagram showing possible ways to provide the apparatus and system with satellite signal availability data, and
Figure 7 is a schematic diagram showing some mobile mine work machines and their possible mine work task or plans to be executed at the planned operational positions.

For the sake of clarity, the figures show some embodiments of the disclosed solution in a simplified manner. In the figures, like reference numerals identify like elements.

### Detailed description of some embodiments

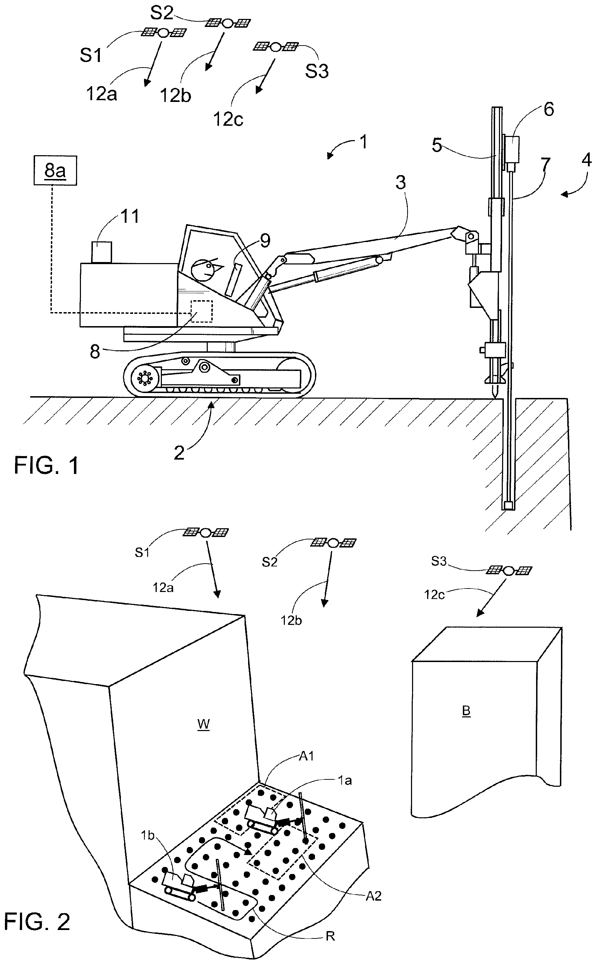

Figure 1 shows a rock drilling rig 1, which is an example of a mobile mine work machine. Other possible mobile mine work machines may be a transporting machine, a loading machine, a measuring machine and a charge loading machine, for example.

The rock drilling rig 1 comprises a movable carrier 2, one or more drilling booms 3 and drilling units 4 arranged in the drilling booms 3. The drilling unit 4 comprises a feed beam 5 on which a rock drilling machine 6 can be moved by means of a feed device. Further, the drilling unit 4 comprises a tool 7 with which the impact pulses given by the percussion device of the rock drilling machine are transmitted to the rock to be drilled. The rock drilling rig 1 further comprises at least one control unit 8 arranged to control actuators of the rock drilling rig 1, for example. The on-board control unit 8 may be a computer, processing device or a corresponding device, and it may comprise a user interface with a display device 9 as well as control means for giving commands and information to the control unit 8. The control unit 8 may be one computer equipped with appropriate software, or an entity consisting of a plurality of computers.

The control unit 8 may be provided with one or more drilling plan or drilling pattern, which may determine a mine work task for the rock drilling rig. The drilling plan or the drilling pattern may determine drill holes to be drilled and may also include instructions regarding positioning of the carrier to a drilling position. Drill hole parameters, such as number of holes, positions of start points, lengths, directions and other needed data may be determined in the drilling pattern. It is also possible that the work task of the rock drilling rig includes instruction relating route of the tramming. In other words, also movement paths of the carrier between the drilling positions i.e. operating positions may be pre-designed and modified.

The control unit 8 may also be provided with an environmental model, which may be an electrical 3D -model of the work site and may thereby define surface topography of the ground as well as locations and shapes of rock walls and constructions located at the work site. The rock drilling rig may be provided with a satellite positioning system 10 comprising at least one receiver 11 on the rock drilling rig 1 for receiving satellite signals 12a - 12c from satellites 13a - 13c. Further, the control unit 8 may comprise one or more computer program products or algorithms to be processed in the processor of the control unit 8. The processed position processing program determines satellite coverage condition data for desired one or more drilling position or other operational position by taking into account the environmental model and satellite signal availability. The satellite signal coverage and availability may be calculated in the control unit 8 on the basis of received satellite signals, or alternatively the data may be input or downloaded into the control unit 8. If need be, the control unit 8 modifies the mine work task based on the calculated satellite coverage condition data for ensuring that the operation of the rock drilling rig is as continuous as possible.

The apparatus and system may be arranged in connection with the control unit 8 of the rock drilling rig as disclosed above, or alternatively, or in addition to, the system may comprise one or more external devices 8a serving as the apparatus or at least participating to the disclosed procedure.

Figure 2 discloses an example of a work site wherein satellite positioning is problematic in some areas because of rock walls W and high buildings B, which may obstruct receiving satellite signals S1 and S2, as it is demonstrated in the Figure. The disclosed system may determine satellite coverage condition data and may modify a work task of a rock drilling rig so that instead of operating at a first area A1 the drilling rig 1a executes drilling at a second area A2, wherein satellite signal quality is better because the area is located at a greater distance from the rock walls W. Further, the system may divide the work task of the second area A2 with a first rock drilling rig 1a and second drilling rig 1b. The second drilling rig 1b may be trammed to the second area A2 along a planned route R. The system may plan and/or modify the route R based on satellite signal strength and quality.

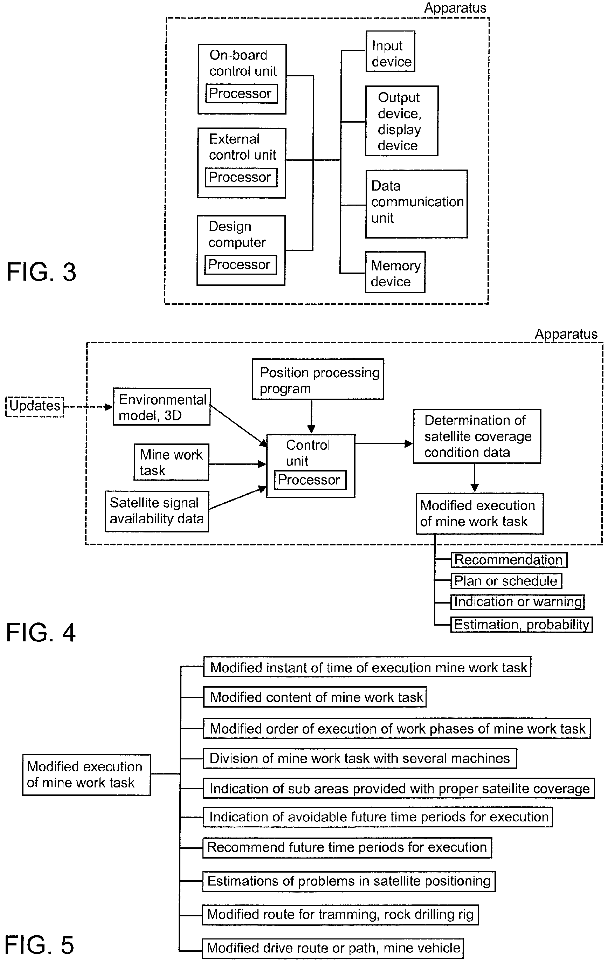

Figure 3 discloses a simplified diagram showing that control unit of the disclosed apparatus may be located on-board the mobile mine work machine or it may be locate elsewhere, such as at a control room or it may be a mobile electrical terminal device. Further, the control unit may be a design computer. However, several different types of control units may also operate in co-operation. Figure 3 also discloses that the apparatus may be provided with needed physical equipment in addition to a processor, such as an input device for inputting data and instructions and an output device for presenting determined information and results. The apparatus may also comprise a data communicating unit for allowing data transmission between the apparatus and one or more external computers, servers or networks. Furthermore, the apparatus may comprise one or more memory devices for storing data.

Figure 4 presents a simplified diagram showing basic principles of the disclosed apparatus. As can be noted, the apparatus comprises a control unit, which may be provided with data on an environmental model, data on one or more work tasks and data on satellite signal availability. The control unit comprises a processor, wherein a position processing program may be executed. The control unit executes needed calculations, estimations and procedures, which are controlled by the program, and the system determines satellite coverage condition data at a desired instant of time or period of time. Based on the satellite condition data the apparatus may present recommendations, suggestions, plans, schedules, estimations and probability values in order to change the work tasks for achieving improved operational results. These issues have already been disclosed in more detailed above in this patent application.

Figure 5 shows a simplified diagram showing some possible alternative modifications, which may be done for mine work tasks on the basis of determined satellite coverage condition data. These issues have already been disclosed in more detailed above in this patent application.

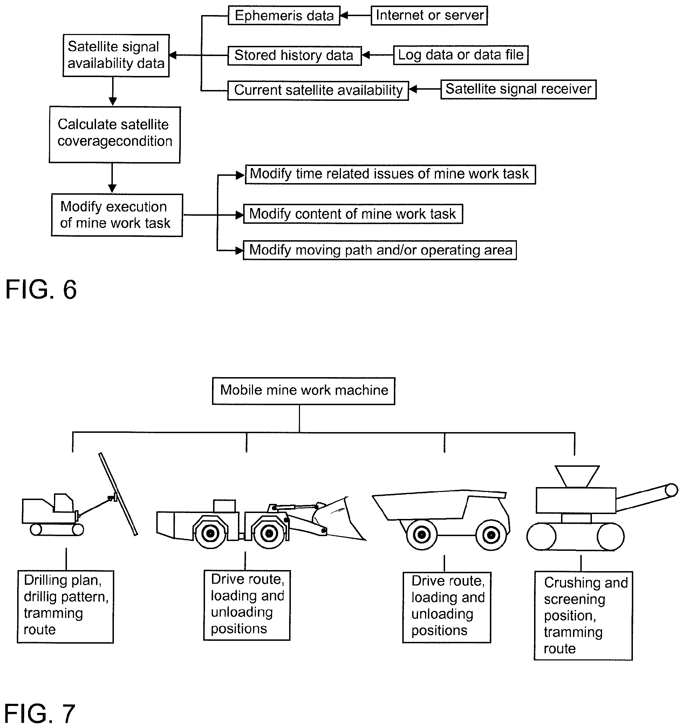

Figure 6 discloses a simplified diagram showing alternative sources for receiving satellite signal availability data. The satellite signal availability data may be based on ephemeris data comprising satellite orbit and almanac data or a mathematical model of the availability of the satellite signal at different locations. This data may be received via data transmission means of the apparatus. Alternatively, or in addition to, the apparatus may use stored GNSS quality history data and/or may use current GNSS quality observation data. This data is used for determining satellite coverage condition data, which is then used for modifying time related issues, content, routes, or all of these features of mine work tasks.

Figure 7 shows some feasible mobile mine work machines and their possible mine work tasks or plans to be executed at the planned operational positions.

Furthermore, below is disclosed some further information relating to the computing means and computer programs utilized in the disclosed apparatus and system.

The disclosed apparatus comprises at least a processing device for determining the satellite coverage condition data, assisting the operator of the mobile mine work machine and modifying execution of mine work tasks as disclosed above. Needed data may be input to the processing device as individual data elements or may be retrieved from one or more memory devices. The processing device may comprise a computer program product, which is executed. The computer program may be recorded on non-transitory computer-readable media including program instructions for implementing various operations executed by a computer. The operator may input data and make selections via one or more input devices. The input device may be a touch screen, a keypad, a mouse or any other suitable control device. By means of the input device, the operator of the rock drilling rig may inform the processing device of the desired future period of time, for example. The operator may also instruct the processing device of desired next or future operational positions and provide the processing device with any other needed data. The processing device may execute needed calculations and may display suggestions, recommendations and plans on a display device. The processing device may also provide the operator with predetermined operating and positioning aid and may show assisting symbols and data on the display device. Further, the apparatus may comprise an output device for storing produced data on a memory device or transmitting the data to another control unit or mobile mining machine. Let it be mentioned that the processing device and a control unit of the mobile mine machine may be separate devices or they can be integrated.

A computer program for implementing the features disclosed in this patent application may be recorded in non-transitory computer-readable media including program instructions to implement various operations embodied by a computer. The media may also include, alone or in combination with the program instructions, data files, data structures, and the like. Examples of computer-readable media or computer-readable storage devices include magnetic media such as hard disks, and optical media such as CR-ROM disks and DVDs, flash memory means, and hardware devices that are configured to store software. The computer-readable media may be a plurality of computer-readable storage devices in a distributed network, so that the program instructions are stored in a plurality of computer-readable storage devices and executed in a distributed fashion. The program instructions may be executed by one or more processors or processing devices.

The drawings and the related description are only intended to illustrate the idea of the invention. In its details, the invention may vary within the scope of the claims.

## Claims

1. An apparatus for determining positional condition of at least one satellite positioned mobile mine work machine at a mine work site, comprising:
at least one control unit (8) provided with at least one processor and at least one position processing program allowed to be executed in the processor for determining satellite coverage at the mine work site;
the control unit (8) is provided with an environmental model of the mine work site;
the control unit (8) is further provided with at least one mine work task determined for the at least one mobile mine work machine and being determined to be executed at least at one operational position at the mine work site;and
the control unit (8) is configured to receive data on satellite signal availability;
**characterized in that**
the mine work task comprises mine work phases requiring accurate positioning and mine work phases requiring no positioning;
the control unit (8) is configured to determine satellite coverage condition data for the at least one operational position at a given time or working period of time on the basis of the data on satellite signal availability and the environmental model; and
the apparatus is configured to modify execution of the at least one work task on the basis of the determined satellite coverage condition data, whereby mine work phases requiring accurate positioning are executed during good satellite coverage conditions and mine work phases requiring no positioning are executed when satellite coverage is uncertain or lost.

2. The apparatus as claimed in claim 1, wherein
the apparatus is configured to modify order of execution of the work phases of the mine work task on the basis of the determined satellite coverage condition data, whereby the work cycle is amended.

3. The apparatus as claimed in claim 1 or 2, wherein
the apparatus is configured to modify execution of the at least one work task by dividing the mine work task with at least two mobile mine work machines and the division is executed on the basis of the determined satellite coverage condition data in order to allow execution of the mine work task during a determined time interval provided with sufficient satellite signals.

4. The apparatus as claimed in any one of the preceding claims 1 - 3, wherein
the apparatus is configured to determine and indicate one or more subset areas (A1, A2) of the mine work site provided with sufficient satellite coverage at input future period of times.

5. The apparatus as claimed in any one of the preceding claims 1 - 4, wherein
the apparatus is configured to indicate future period of times to be avoided for the execution of the at least one work task in order to avoid insufficient satellite positioning situations.

6. The apparatus as claimed in any one of the preceding claims 1 - 5, wherein
the apparatus is configured to calculate estimates for probabilities of positioning problems for the at least one operational position of the mine work site at a given time or working period of time.

7. The apparatus as claimed in any one of the preceding claims 1 - 6, wherein
the apparatus is configured to receive and store positioning data realized at the mine work site and is configured to take the stored realized positioning data into account in future positioning situations and when estimating success of positioning and satellite coverage at a given time and location.

8. The apparatus as claimed in any one of the preceding claims 1 - 7, wherein
the apparatus is configured to receive realized position measuring data from the at least one mobile mine work machine and is configured to update the environmental model of the mine work site on the basis of the realized position data.

9. The apparatus as claimed in any one of the preceding claims 1 - 8, wherein
the satellite signal availability data received by the control unit (8) is based on ephemeris data computed electronically from mathematical models of the motion of artificial satellites and the earth.

10. The apparatus as claimed in any one of the preceding claims 1 - 8, wherein
the satellite signal availability data received by the control unit is based on stored history data on realized satellite signal availability and coverage gathered and input during utilization of previous satellite positioning situations.

11. The apparatus as claimed in any one of the preceding claims 1 - 8, wherein
the satellite signal availability data received by the control unit (8) is based on current satellite signal availability detected by means of at least one satellite signal receiver (11), which is located on the mobile mine work machine.

12. The apparatus as claimed in any one of the preceding claims 1 to 11, wherein
the mobile mine work machine is a rock drilling rig (1);
the mine work task of the rock drilling rig (1) being drilling drill holes determined in at least one drilling pattern; and
the apparatus is configured to modify instant of time of the execution of the mine work task on the basis of the determined satellite coverage condition data.

13. A method of determining positional condition of at least one satellite positioned mobile mine work machine at a mine work site, the method comprising the following steps :
determining satellite coverage at the mine work site by means of at least one control unit (8);
providing the control unit (8) with an environmental model of the mine work site;
providing the control unit (8) further with at least one mine work task determined to be executed by the mobile mine work machine at least at one operational position at the mine work site, wherein the mine work task comprises mine work phases requiring accurate positioning and mine work phases requiring no positioning; and
providing the control unit (8) with data on satellite signal availability;
**characterized in that** the method further comprises the following steps:
executing a position processing program in a processor of the control unit and determining satellite coverage condition data for the at least one operational position at a given time or working period of time on the basis of the data on satellite signal availability and the environmental model; and
modifying execution of the at least one work task on the basis of the determined satellite coverage condition data; whereby mine work phases requiring accurate positioning are executed during good satellite coverage conditions and mine work phases requiring no positioning are executed when satellite coverage is uncertain or lost.

14. A computer program product, wherein
the computer program product comprises program code means configured to execute the steps in the independent claim 13 when being run on a computer or a data processing device.

## Patentansprüche

1. Einrichtung zum Bestimmen von Positionsbedingung von mindestens einer satellitenpositionierten, mobilen Bergbauarbeitsmaschine an einer Bergbauarbeitsstelle, umfassend:
mindestens eine Steuereinheit (8), die mit mindestens einem Prozessor und mindestens einem Positionsverarbeitungsprogramm bereitgestellt ist, das in dem Prozessor zum Bestimmen von Satellitenabdeckung an der Bergbauarbeitsstelle ausgeführt werden kann;
die Steuereinheit (8) mit einem Umgebungsmodell der Bergbauarbeitsstelle bereitgestellt ist;
die Steuereinheit (8) weiter mit mindestens einer Bergbauarbeitsaufgabe bereitgestellt ist, die für die mindestens eine mobile Bergbauarbeitsmaschine bestimmt ist und bestimmt ist, mindestens an einer Betriebsposition der Bergbauarbeitsstelle ausgeführt zu werden; und
die Steuereinheit (8) konfiguriert ist, Daten über Satellitensignalverfügbarkeit zu empfangen;
**dadurch gekennzeichnet, dass**
die Bergbauarbeitsaufgabe Bergbauarbeitsphasen, die exakte Positionierung erfordern, und Bergbauarbeitsphasen, die keine Positionierung erfordern, umfasst;
die Steuereinheit (8) konfiguriert ist, Satellitenabdeckungsbedingungsdaten für die mindestens eine Betriebsposition zu einem gegebenen Zeitpunkt oder einer gegebenen Arbeitszeitperiode auf der Basis der Daten über Satellitensignalverfügbarkeit und dem Umgebungsmodell zu bestimmen; und
die Einrichtung konfiguriert ist, der mindestens einen Arbeitsaufgabe auf der Basis der bestimmten Satellitenabdeckungsbedingungsdaten zu modifizieren, wodurch Bergbauarbeitsphasen, die eine exakte Positionierung erfordern während guter Satellitenabdeckungsbedingungen ausgeführt werden, und Bergbauarbeitsphasen, die keine Positionierung erfordern, ausgeführt werden, wenn Satellitenabdeckung unsicher oder verloren ist.

2. Einrichtung nach Anspruch 1, wobei
die Einrichtung konfiguriert ist, Reihenfolge einer Ausführung der Arbeitsphasen der Bergbauarbeitsaufgabe auf der Basis der bestimmten Satellitenabdeckungsbedingungsdaten zu modifizieren, wodurch der Arbeitszyklus geändert wird.

3. Einrichtung nach Anspruch 1 oder 2, wobei
die Einrichtung konfiguriert ist, Ausführung der mindestens einen Arbeitsaufgabe durch Teilen der Bergbauarbeitsaufgabemit mindestens zwei mobilen Bergbauarbeitsmaschinen zu modifizieren, und die Teilung auf der Basis der bestimmten Satellitenabdeckungsbedingungsdaten ausgeführt wird, um Ausführung der Bergbauarbeitsaufgabewährend eines bestimmten Zeitintervalls zu erlauben, das mit ausreichenden Satellitensignalen bereitgestellt ist.

4. Einrichtung nach einem der vorstehenden Ansprüche 1-3, wobei
die Einrichtung konfiguriert ist, eine oder mehrere Teilsatzflächen (A1, A2) der Bergbauarbeitsstelle zu bestimmen und anzugeben, die zu eingegebenen zukünftigen Zeitperioden mit ausreichender Satellitenabdeckung bereitgestellt sind.

5. Einrichtung nach einem der vorstehenden Ansprüche 1-4, wobei:
die Einrichtung konfiguriert ist, zukünftige Zeitperioden anzugeben, die für die Ausführung der mindestens einen Arbeitsaufgabe zu vermeiden sind, um unzureichende Satellitenpositionierungssituationen zu vermeiden.

6. Einrichtung nach einem der vorstehenden Ansprüche 1-5, wobei
die Einrichtung konfiguriert ist, Schätzungen für Wahrscheinlichkeiten von Positionierungsproblemen für die mindestens eine Betriebsposition der Bergbauarbeitsstelle zu einem gegebenen Zeitpunkt oder einer gegebenen Arbeitszeitperiode zu berechnen.

7. Einrichtung nach einem der vorstehenden Ansprüche 1-6, wobei
die Einrichtung konfiguriert ist, Positionierungsdaten zu empfangen und zu speichern, die an der Bergbauarbeitsstelle realisiert werden, und konfiguriert ist, die gespeicherten realisierten Positionierungsdaten bei zukünftigen Positionierungssituationen und bei Schätzung von Erfolg von Positionierung und Satellitenabdeckung zu einer gegebenen Zeit und an einem gegebenen Ort zu berücksichtigen .

8. Einrichtung nach einem der vorstehenden Ansprüche 1-7, wobei
die Einrichtung konfiguriert ist, realisierte Positionsmessdaten von der mindestens einen mobilen Bergbauarbeitsmaschine zu empfangen, und konfiguriert ist, das Umgebungsmodell der Bergbauarbeitsstelle auf der Basis der realisierten Positionsdaten zu aktualisieren.

9. Einrichtung nach einem der vorstehenden Ansprüche 1-8, wobei
die Satellitensignalverfügbarkeitsdaten, die von der Steuereinheit (8) empfangen werden, auf Ephemeris-Daten basieren, die elektronisch aus mathematischen Modellen der Bewegung künstlicher Satelliten und der Erde berechnet werden.

10. Einrichtung Nach einem der vorstehenden Ansprüche 1-8, wobei
die Satellitensignalverfügbarkeitsdaten, die von der Steuereinheit (8) empfangen werden, auf gespeicherten Verlaufsdaten über realisierte Satellitensignalverfügbarkeit und Abdeckung basieren, die während Nutzung vorheriger Satellitenpositionssituationen gesammelt und eingegeben wurden.

11. Einrichtung Nach einem der vorstehenden Ansprüche 1-8, wobei
die Satellitensignalverfügbarkeitsdaten, die von der Steuereinheit (8) empfangen werden, auf aktueller Satellitensignalverfügbarkeit basieren, erfasst durch mindestens einen Satellitensignalempfänger (11), der an der mobilen Bergbauarbeitsmaschine gelegen ist.

12. Einrichtung nach einem der vorstehenden Ansprüche 1 bis 11, wobei
die mobile Bergbauarbeitsmaschine ein Gesteinsbohrgerät (1) ist;
die Bergbauarbeitsaufgabe des Gesteinsbohrgeräts (1) Bohren von Löchern ist, die in mindestens einem Bohrmuster bestimmt sind; und
die Einrichtung konfiguriert ist, Zeitpunkt der Ausführung der Bergbauarbeitsaufgabe auf der Basis der bestimmten Satellitenabdeckungsbedingungsdaten zu modifizieren.

13. Verfahren zum Bestimmen von Positionsbedingung von mindestens einer satellitenpositionierten, mobilen Bergbauarbeitsmaschine an einer Bergbauarbeitsstelle, das Verfahren umfassend die folgenden Schritte:
Bestimmen von Satellitenabdeckung an der Bergbauarbeitsstelle durch mindestens eine Steuereinheit (8);
Bereitstellen der Steuereinheit (8) mit einem Umgebungsmodell der Bergbauarbeitsstelle;
Bereitstellen der Steuereinheit (8) weiter mit mindestens einer Bergbauarbeitsaufgabe, die zur Ausführung durch die mobile Bergbauarbeitsmaschine an mindestens einer Betriebsposition der Bergbauarbeitsstelle bestimmt ist; wobei die Bergbauarbeitsaufgabe Bergbauarbeitsphasen, die exakte Positionierung erfordern, und Bergbauarbeitsphasen, die keine Positionierung erfordern, umfasst; und
Bereitstellen der Steuereinheit (8) mit Daten über Satellitensignalverfügbarkeit;
**dadurch gekennzeichnet, dass** das Verfahren weiter die folgenden Schritte umfasst:
Ausführen eines Positionsverarbeitungsprogramms in einem Prozessor der Steuereinheit und Bestimmen von Satellitenabdeckungsbedingungsdaten für die mindestens eine Betriebsposition zu einer gegebenen Zeit oder Arbeitszeitperiode auf der Basis der Daten über Satellitenabdeckungsbedingung und Umgebungsmodell; und
Modifizieren einer Ausführung der mindestens einen Arbeitsaufgabe auf der Basis der bestimmten Satellitenabdeckungsbedingungsdaten; wodurch Bergbauarbeitsphasen, die eine exakte Positionierung erfordern während guter Satellitenabdeckungsbedingungen ausgeführt werden, und Bergbauarbeitsphasen, die keine Positionierung erfordern, ausgeführt werden, wenn Satellitenabdeckung unsicher oder verloren ist.

14. Computerprogrammprodukt, wobei
das Computerprogrammprodukt Programmcodemittel umfasst, die konfiguriert sind, die Schritte in dem unabhängigen Anspruch 13 auszuführen, wenn es auf einem Computer oder einer Datenverarbeitungsvorrichtung läuft.

## Revendications

1. Appareil pour déterminer une condition de position d'au moins une machine de travail minier mobile positionnée par satellite au niveau d'un site de travail minier, comprenant:
au moins une unité de commande (8) dotée d'au moins un processeur et d'au moins un programme de traitement de position pouvant être mis en œuvre dans le processeur pour déterminer la couverture satellite au niveau du site de travail minier ;
l'unité de commande (8) est dotée d'un modèle environnemental du site de travail minier ;
l'unité de commande (8) est en outre dotée d'au moins une tâche de travail minier déterminée pour l'au moins une machine de travail minier mobile et étant déterminée pour être mise en œuvre au moins au niveau d'une position opérationnelle au niveau du site de travail minier ; et
l'unité de commande (8) est configurée pour recevoir des données sur la disponibilité de signal satellite ;
**caractérisé en ce que**
la tâche de travail minier comprend des phases de travail minier nécessitant un positionnement précis et des phases de travail minier ne nécessitant aucun positionnement ;
l'unité de commande (8) est configurée pour déterminer des données de condition de couverture satellite pour l'au moins une position opérationnelle à un moment ou une période de temps de travail donné(e) sur la base des données sur la disponibilité de signal satellite et du modèle environnemental ; et
l'appareil est configuré pour modifier la mise en œuvre de l'au moins une tâche de travail sur la base des données de condition de couverture satellite déterminées, selon lequel les phases de travail minier nécessitant un positionnement précis sont mises en œuvre durant de bonnes conditions de couverture satellite et des phases de travail minier ne nécessitant aucun positionnement sont mises en œuvre lorsque la couverture satellite est incertaine ou perdue.

2. Appareil selon la revendication 1, dans lequel
l'appareil est configuré pour modifier l'ordre de mise en œuvre des phases de travail de la tâche de travail minier sur la base des données de condition de couverture satellite déterminées, selon lequel le cycle de travail est amendé.

3. Appareil selon la revendication 1 ou 2, dans lequel
l'appareil est configuré pour modifier la mise en œuvre de l'au moins une tâche de travail en divisant la tâche de travail minier avec au moins deux machines de travail minier mobiles et la division est mise en œuvre sur la base des données de condition de couverture satellite déterminées afin de permettre la mise en œuvre de la tâche de travail minier durant un intervalle de temps déterminé doté de suffisamment de signaux satellites.

4. Appareil selon l'une quelconque des revendications précédentes 1-3, dans lequel
l'appareil est configuré pour déterminer et indiquer une ou plusieurs zones de sous-ensemble (A1, A2) du site de travail minier dotées d'une couverture satellite suffisante à une future période de temps d'entrée.

5. Appareil selon l'une quelconque des revendications précédentes 1-4, dans lequel
l'appareil est configuré pour indiquer une future période de temps à éviter pour la mise en œuvre de l'au moins une tâche de travail afin d'éviter des situations de positionnement de satellites insuffisant.

6. Appareil selon l'une quelconque des revendications précédentes 1-5, dans lequel
l'appareil est configuré pour calculer des estimations de probabilités de problèmes de positionnement pour l'au moins une position opérationnelle du site de travail minier à un moment ou une période de temps de travail donné(e).

7. Appareil selon l'une quelconque des revendications précédentes 1-6, dans lequel
l'appareil est configuré pour recevoir et stocker des données de positionnement réalisées au niveau du site de travail minier et est configuré pour prendre en compte les données de positionnement réalisées stockées dans des situations de positionnement futures et lors de l'estimation du succès du positionnement et de la couverture satellite à un moment et à un emplacement donnés.

8. Appareil selon l'une quelconque des revendications précédentes 1-7, dans lequel
l'appareil est configuré pour recevoir des données de mesure de position réalisées à partir de l'au moins une machine de travail minier mobile et est configuré pour mettre à jour le modèle environnemental du site de travail minier sur la base des données de position réalisées.

9. Appareil selon l'une quelconque des revendications précédentes 1-8, dans lequel
les données de disponibilité du signal satellite reçues par l'unité de commande (8) sont basées sur des données éphémérides calculées électroniquement à partir de modèles mathématiques du mouvement des satellites artificiels et de la Terre.

10. Appareil selon l'une quelconque des revendications précédentes 1-8, dans lequel
les données de disponibilité de signal satellite reçues par l'unité de commande sont basées sur des données d'historique stockées sur la disponibilité et la couverture du signal satellite réalisé recueillies et l'entrée durant l'utilisation de situations de positionnement par satellite antérieures.

11. Appareil selon l'une quelconque des revendications précédentes 1-8, dans lequel
les données de disponibilité du signal satellite reçues par l'unité de commande (8) sont basées sur la disponibilité actuelle du signal satellite détectée au moyen d'au moins un récepteur de signal satellite (11),
qui est situé sur la machine de travail minier mobile.

12. Appareil selon l'une quelconque des revendications précédentes 1 à 11, dans lequel
la machine de travail minier mobile est un engin de forage de roche (1) ;
la tâche de travail minier de l'engin de forage de roche (1) étant de forer des trous de forage déterminés dans au moins un modèle de forage ; et
l'appareil est configuré pour modifier l'instant du temps de la mise en œuvre de la tâche de travail minier sur la base des données de condition de couverture satellite déterminées.

13. Procédé de détermination d'une condition de position d'au moins une machine de travail minier mobile positionnée par satellite au niveau d'un site de travail minier, le procédé comprenant les étapes suivantes consistant à
déterminer la couverture satellite au niveau du site de travail minier au moyen d'au moins une unité de commande (8) ;
doter l'unité de commande (8) d'un modèle environnemental du site de travail minier ;
doter en outre l'unité de commande (8) d'au moins une tâche de travail minier déterminée pour être mise en œuvre par la machine de travail minier mobile au moins au niveau d'une position opérationnelle au niveau du site de travail minier, dans lequel la tâche de travail minier comprend des phases de travail minier nécessitant un positionnement précis et des phases de travail minier ne nécessitant aucun positionnement ; et
doter l'unité de commande (8) de données sur la disponibilité de signal satellite ;
**caractérisé en ce que** le procédé comprend en outre les étapes suivantes consistant à :
mettre en œuvre un programme de traitement de position dans un processeur de l'unité de commande et déterminer des données de condition de couverture satellite pour l'au moins une position opérationnelle à un moment ou une période de temps de travail donné(e) sur la base des données sur la disponibilité de signal satellite et du modèle environnemental ; et
modifier la mise en œuvre de l'au moins une tâche de travail sur la base des données de condition de couverture satellite déterminées ; selon lequel les phases de travail minier nécessitant un positionnement précis sont mises en œuvre durant de bonnes conditions de couverture satellite et des phases de travail minier ne nécessitant aucun positionnement sont mises en œuvre lorsque la couverture satellite est incertaine ou perdue.

14. Produit de programme informatique, dans lequel
le produit de programme informatique comprend des moyens de code de programme configurés pour mettre en œuvre les étapes selon la revendication indépendante 13 lorsqu'ils sont exécutés sur un ordinateur ou un dispositif de traitement de données.
